# EUROPEAN PATENT SPECIFICATION

(11) **EP 3 397 422 B1**
(45) Date of publication and mention of the grant of the patent: **04.08.2021**
(21) Application number: 16826571.8
(22) Date of filing: 22.12.2016
(51) Int. Cl.: B23K 35/02, H05H 1/34

(54) **ELECTRODE OF A WELDING TORCH**
ELEKTRODE EINES SCHWEISSBRENNERS
ÉLECTRODE DE CHALUMEAU DE SOUDAGE

(30) Priority: 29.12.2015 US 201514982010
(43) Date of publication of application: 07.11.2018
(73) Proprietor: Camarc LLC, Westland, MI 48185 (US)
(72) Inventor: HUGHES, Russell Vernon, Plymouth Michigan 48170 (US)
(74) Representative: Docherty, Andrew John
(86) International application number: PCT/US2016/068243
(87) International publication number: WO 2017/116962

(56) References cited:
- EP-A1- 2 894 005
- EP-A2- 1 262 273
- FR-A1- 2 682 626
- N.A.: "Seamlessly joined? Comparing cast and soldered electrodes for spot welding.", , 27 August 2013 (2013-08-27), pages 1-2, XP055359323, Retrieved from the Internet: URL:https://www.plansee.com/en/news-archiv e/News/detail/seamlessly-joined-comparing- cast-and-soldered-electrodes-for-spot-weld ing.html [retrieved on 2017-03-28]

## Description

### REFERENCE TO RELATED APPLICATIONS

This application claims priority to United States Application No. 14/982,010 filed December 29, 2015 which is a continuation in part of United States Application No. 14/153,190 filed January 13, 2014.

### BACKGROUND OF THE INVENTION

A TIG (Tungsten Inert Gas) welding torch is mounted in a seam tracker and manipulated by a robot arm to melt filler wire, fusing separate workpieces or panels of an automotive body together at a weld seam. The welding torch includes a tungsten electrode that should be easily aligned in a direction transverse to the weld seam with the filler wire. When the electrode is removed from the welding torch, it is important that the positioning of the new electrode is repeatable to eliminate time consuming recalibration of the welding torch. This is also applicable to plasma welding torches.

Tungsten electrodes used in a TIG welding system often include a threaded portion. The threaded portion includes a plurality of threads, and the threaded portion is threaded into a component of a welding torch to secure the electrode to the welding torch. A portion of the tungsten thread can chip, which can affect the installation of the electrode into the welding torch. Typically, the thread angle of the plurality of threads is about 60°.

It is also beneficial when creating the electrode to reduce the scrap metal rate.

A welding torch can be used to weld sheet metal workpieces together at a weld seam. In one example, the sheet metal workpieces are a roof and a body of a vehicle. Styles of vehicles are limited by the fact that there are constraints on how much metal can be stretched. A new vehicle style can be created by using several pieces of metal.

EP2894005 discloses an electrode (22) including an elongated body (54) defining a longitudinal axis. A seating end portion (50) includes a first truncated cone. The first truncated cone has a first truncated end and an opposing conical end. A working end portion (52) includes a second truncated cone having a second truncated end. A constant length is defined between the opposing conical end and the second truncated end. The constant length is about 0.875 inch +/- 0.001 inch. The elongated body (54) is located between the seating end portion (50) and the working end portion (52).

FR2682626 discloses a welding electrode composed of an elongate body (7) and a tip (6), between which a spacer (8) is inserted. The spacer (8) is made of a metal or alloy whose electrical resistivity is lower than that of the metal or alloy of the body (7) and the tip (6). Rapid initial heating of the tip (6) is thus obtained, which makes it possible to weld, without any difficulty, metal sheets coated with a priming paint layer or a protective layer which has to be thermally destroyed at the points of welding.

N.A.: "Seamlessly joined? Comparing cast and soldered electrodes for spot welding.", 27 August 2013 (2013-08-27), pages 1-2, XP055359323, compares cast and soldered electrodes for spot welding.

### SUMMARY OF THE INVENTION

The invention is defined in the appended claims.

The present invention can be best understood from the following specification and drawings, the following of which is a brief description.

### BRIEF DESCRIPTION OF THE DRAWINGS

Figure 1 illustrates a portion of a plasma welding torch;
Figure 2 illustrates a portion of a Tungsten Inert Gas (TIG) welding torch;
Figure 3 illustrates an alternate electrode with a 55° threaded angle;
Figure 4 illustrates an electrode made of a dual material;
Figure 5 illustrates an electrode of the dual materials with threads;
Figure 6 illustrates a working end of an electrode having a radius;
Figure 7 illustrates a cross section of a nozzle of a plasma welding torch with a plasma arc;
Figure 8 illustrates a cross section of the nozzle of a plasma welding torch with a welding arc;
Figure 9 illustrates a cross section of the nozzle of a plasma welding torch that is powered by alternating current;
Figure 10 illustrates a perspective view of the nozzle;
Figure 11 illustrates a cross-sectional view of the nozzle;
Figure 12 illustrates a side view of the nozzle;
Figure 13 illustrates a bottom view of the nozzle;
Figure 14 illustrates the nozzle and a socket;
Figure 15 illustrates the nozzle received within the socket;
Figures 16 to 30 illustrate a method of changing an electrode of the welding torch;
Figure 31 illustrates a servo slide that holds sockets that are employed to change the electrode of the welding torch;
Figure 32 illustrates an electrode autochanger;
Figure 33 illustrates the electrode being inserted into the electrode autochanger;
Figure 34 illustrates the electrode autochanger gripping the electrode;
Figure 35 illustrates the electrode autochanger rotating to decouple the electrode from a welding torch;
Figure 36 illustrates the electrode autochanger removing the electrode from the welding torch;
Figure 37 illustrates the electrode autochanger ejecting the electrode;
Figure 38 illustrates the electrode autochanger receiving a new electrode; and
Figure 39 illustrates the electrode autochanger coupling the new electrode to the welding torch.

### DETAILED DESCRIPTION OF THE PREFERRED EMBODIMENT

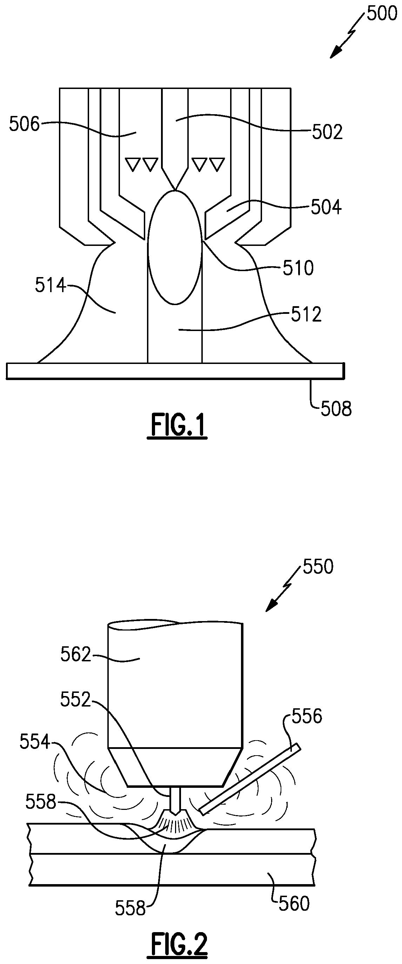

Figure 1 illustrates a portion of a plasma welding torch 500. An electrode 502 is received in a nozzle 504. A pilot arc is ignited and combines with a flow of a typically inert plasma gas 506 (such as Argon). The pilot arc assists with the ignition and establishment of a main welding arc 512 established between the electrode 502 and a workpiece 508. The main welding arc 512 is separated from a shielding gas 514 and the welding arc 512 is discharged through a discharge orifice 510 to form a high temperature jet or flame that projects from the nozzle 504. The pilot arc is connected between the electrode 302 and the workpiece 508 to cause melting of the workpiece 508.

Figure 2 illustrates a portion of a Tungsten Insert Gas (TIG) welding torch 550. TIG welding is an arc welding process that uses a non-consumable tungsten electrode 552 to product a weld. The area that is welded is protected from contamination by an inert shield gas 554, such as argon or helium. During use, the shield gas flows through a hole in a shield gas cup 562. A welding arc is struck, and the filler wire 556 is melted to form a weld bead 558. The welding torch 24 is then moved during welding to create a weld seam between the workpieces 560.

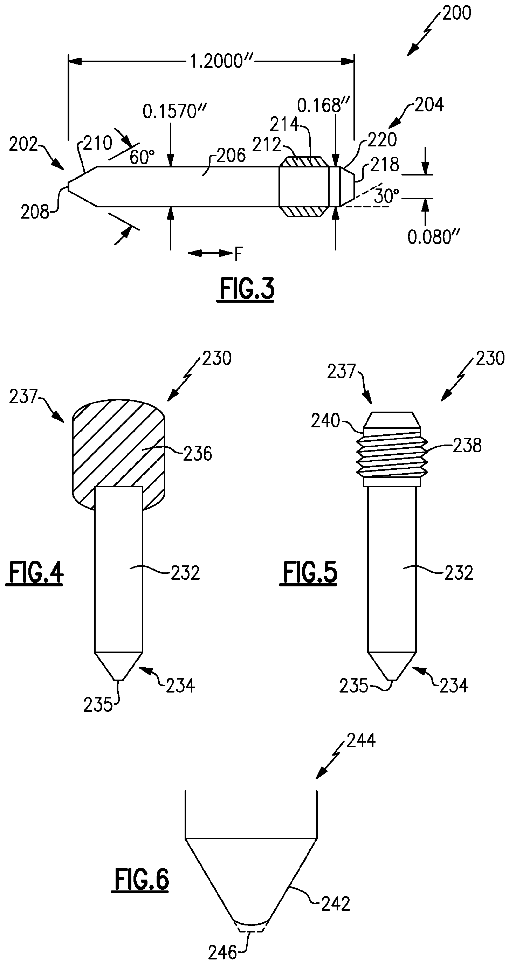

Figure 3 illustrates an electrode 200 that can be employed in the plasma welding torch 500 or the TIG welding torch 550. The electrode 200 includes a working end portion 202, a seating end portion 204, and an elongated body 206 located between the seating end portion 204 and the working end portion 202 that extends along a longitudinal axis F. The electrode 200 has a length of about 1.2000 inch (about 3 cm). In one example, the electrode 200 has a diameter of about 0.1570 inch (about 4 mm). In one example, the electrode 200 is made of tungsten. In one example, the tungsten is 1.5% lanthanated tungsten.

The working end portion 202 includes a working end flat surface 208 that is located in a plane substantially perpendicular to the longitudinal axis F and a working end angled surface 210 that extends between the working end flat surface 208 and the elongated body 206. The working end flat surface 208 and the working end angled surface 210 define a first truncated cone. The welding arc is struck from the working end portion 202.

The working end surface 208 has a truncation of about 0.010 inches (about .25 mm). Truncation is important because it is difficult to grind or create a true point at the working end portion 202. Additionally, a true point can be easily damaged in handling. A true point also cannot support a 400 Ampere arc without possibly breaking. Any material (or tungsten, in the case of a tungsten electrode) that breaks off could be would be propelled into the weld pool and contaminate the weld. The working end portion 202 assists with providing coaxial repeatability when electrode is replaced from a welding torch.

The first truncated cone of the working end portion 202 has an included angle of about 60°. An included angle of 60° provides the best performance at 400 Amperes operating current and minimizes erosion, increasing the life of the electrode 200. Finally, the working end flat surface 208 at the end of the electrode 200 "pre-wears" the electrode 200, allowing for more stable performance from the beginning of the welding process as the electrode 200 is already "broken in."

The seating end portion 204 includes a threaded section 212 having a plurality of threads 214. The plurality of threads 214 have a threaded angle of about 55°. A threaded angle of 55° provides better retention characteristics in the welding torch and is less likely to come loose at the same installation torque than the typical 60° threaded angle. The electrode 200 can then be attached to the welding torch tighter for the same torque.

The seating end portion 204 includes a circumferential portion 216 having a diameter of about 0.168 inch (about 4.27 mm). The seating end portion 204 includes a seating end flat surface 218 that is located in a plane substantially perpendicular to the longitudinal axis F and a seating end angled surface 220 that extends between the seating end flat surface 218 and the circumferential portion 216. The circumferential portion 216 is located between the threaded portion 212 and the seating end angled surface 220. That is, the circumferential portion 216 is located between the threaded portion 216 and the second truncated cone. The seating end flat surface 218 and the seating end angled surface 220 define a second truncated cone. The seating end flat surface 218 has a diameter of about 0.080 inch (about 2 mm). The distance between the portion of the threaded section 212 closest to the working end flat surface 208 and the seating end flat surface 218 is about 0.325 inch (about 8.26 mm). The second truncated cone of the seating end portion 204 defines an included angle of approximately 60° (double of the 30° half included angle shown in the figures). The seating end flat surface 218 prevents the electrode 200 from bottoming out when installed in the welding torch.

In another example shown in Figure 4, an electrode 230 is formed of two different materials. An electrode shank 232 formed of tungsten includes a working end portion 234 having a working end flat end surface 235. The tungsten shank 232 has a diameter of about 0.157 inch (about 4 mm). A second material, such as copper alloy (such as bronze) or a silver alloy, is deposited to form a head 36 at the opposing seating end portion 237 of the electrode 230. Copper alloy and silver alloy both attach well to tungsten. In one example, the second material is deposited by melting a wire and casting it on the seating end portion 237 of the electrode 230. In another example, the second material can be friction welded to the electrode shank 232. In another example, the second material can be added by rotation welding.

As shown in Figure 5, after the second material is secured to the tungsten electrode shank 232 to form the head 236, the head 236 is machined to form a plurality of threads 238 on the seating end portion 240 of the electrode 230. The seating end portion 240 of copper alloy or silver alloy with the plurality of threads 238 is more easily machined than tungsten and less likely to break or crack like tungsten. The remainder of the electrode 230 is made of tungsten.

Prior electrodes are formed from a solid .25 inch (6.35 mm) diameter rod of tungsten, providing only about 50% material utilization of a relatively expensive metal. Casting or welding the piece of copper alloy or silver alloy for the required diameter allows the tungsten rod to be reduced from .25 inch (6.35 mm) to about .157 inch (about 4 mm). A .157 inch (4 mm) tungsten rod is about 40% of the weight of a tungsten rod that has a diameter of about .25 inch (6.35 mm), and is therefore less expensive. The material utilization efficiency of the .157 inch (4 mm) tungsten shank 232 is nearly 100%.

In another example shown in Figure 6, the working end 242 of the electrode 244 includes a radiused surface 246 instead of a flat end surface (shown in dashed lines).

An electrode can have any combination of the above described features, namely the 55° threaded angle, the dual material electrode, and the radiused surface. For example, an electrode can have a 55° threaded angle and be made out of dual materials.

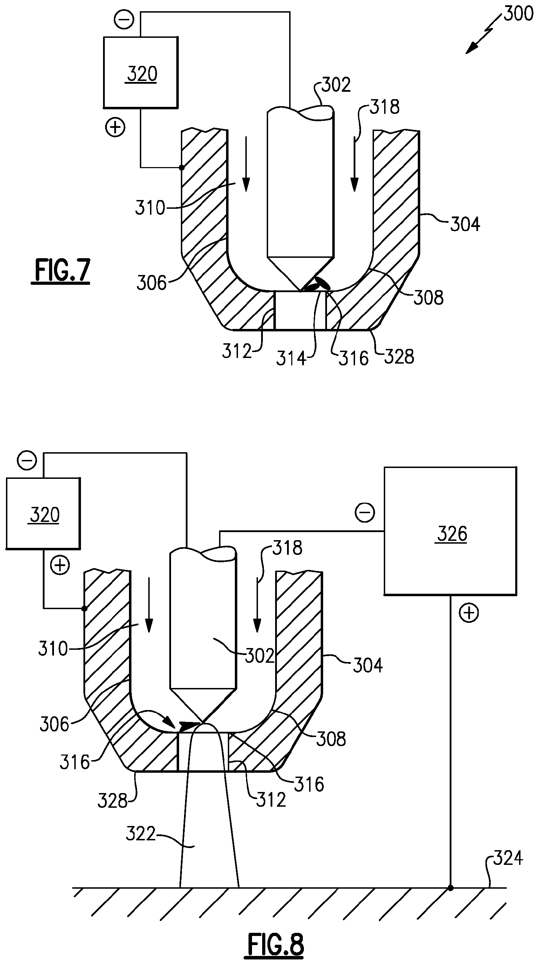

Figure 7 illustrates a portion of a plasma welding torch 300. A portion of an electrode 302 is received in a bore 310 of a nozzle 304. An internal surface 306 of the nozzle 304 has a radius 308. In one example, the radius 308 is 3 mm. By providing a radius 308 near a discharge orifice 312, a pilot arc 314 (a non-transferred arc) established between the electrode 302 located inside the bore 310 and the nozzle 304 can concentrate on a sharp corner 316 where the radius 308 meets the discharge orifice 312, instead of the pilot arc 314 wandering. In one example, the discharge orifice 312 has a diameter of about 5 mm.

The pilot arc 314 is ignited from a separate pilot arc power supply 320 and assists with the ignition and establishment of a main welding arc 322. Although the pilot arc 314 may rotate around the sharp corner 316, the pilot arc 314 remains ignited at a back of the discharge orifice 312. This provides a more stable and effective pilot arc 314 than a conventionally tapered nozzle, improving the ability to assist with consistently striking a main welding arc (a transferred arc).

Figure 8 illustrates a portion of the plasma welding torch 300 showing the main arc 322 that transfers from the electrode 302 to a workpiece 324 through the discharge orifice 312. The pilot arc 314 is combined with a flow of a typically inert plasma gas 318 (such as Argon) that is discharged through the discharge orifice 312 to form a high temperature jet or flame that projects from the nozzle 304. The pilot arc 314 is connected between the electrode 302 of the plasma welding torch 300 and the workpiece 324 to cause melting of the workpiece 324. A main arc power supply 326 ignites the main arc 322 from the pilot arc 314.

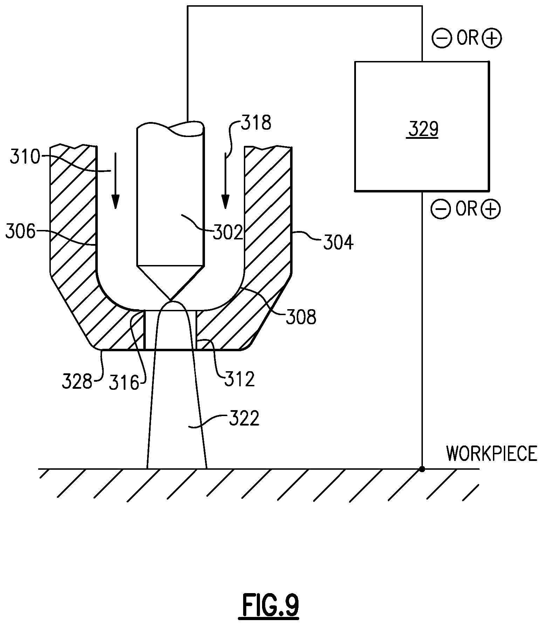

Figure 9 illustrates the plasma welding torch 300 employing an alternating current main arc power supply 329. The nozzle 304 has an external radius 328 that surrounds the discharge orifice 312. As there is less material around the discharge orifice 312, this reduces the area that could be a focal point of a hot-spot for a secondary arc discharge, reducing the likelihood of double-arcing. This is especially true where an alternating current transferred arc is used. During the reverse polarity cycles of the main welding arc 22, where the electrons are flowing from the workpiece 324 to the electrode 302, the external radius 328 on the outside of the nozzle 304 reduces double-arching.

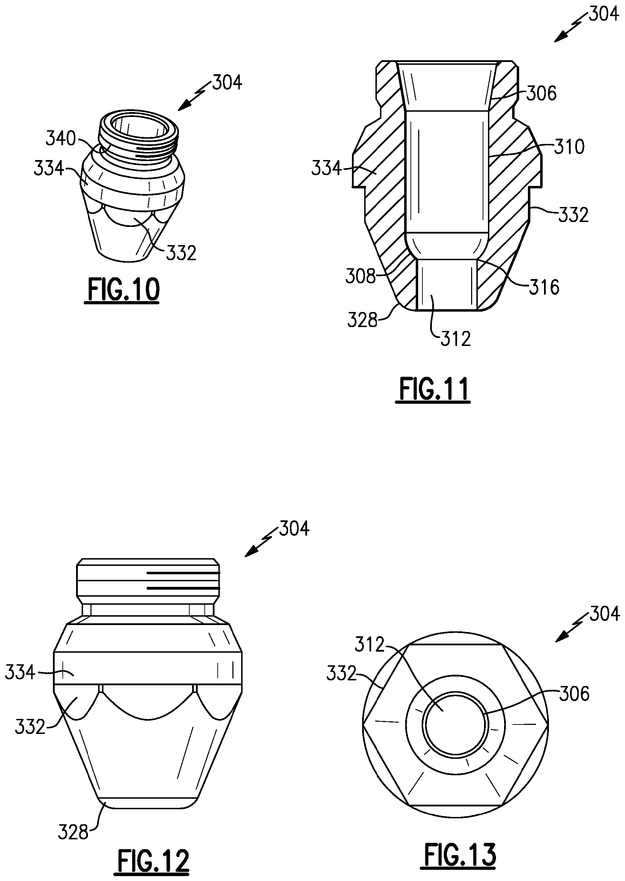

Figures 10 to 13 illustrate the nozzle 304. The nozzle 304 can be made of copper alloy or silver alloy. The nozzle 304 includes six socket flats 332 on an external surface of the nozzle 304. Each socket flat 332 is shaped as a portion of a circle. In one example, each socket flat 332 is about 1/6 of a circle. The nozzle 304 can also be sprayed with a ceramic coating (non-conductive) to further reduce the risk of double arcing. On the side of the socket flats 332 away from the discharge orifice 312 is a circumferential flat surface 334 on which text can be added. The nozzle 304 includes a threaded portion 340 to attach the nozzle 304 to the welding torch 300.

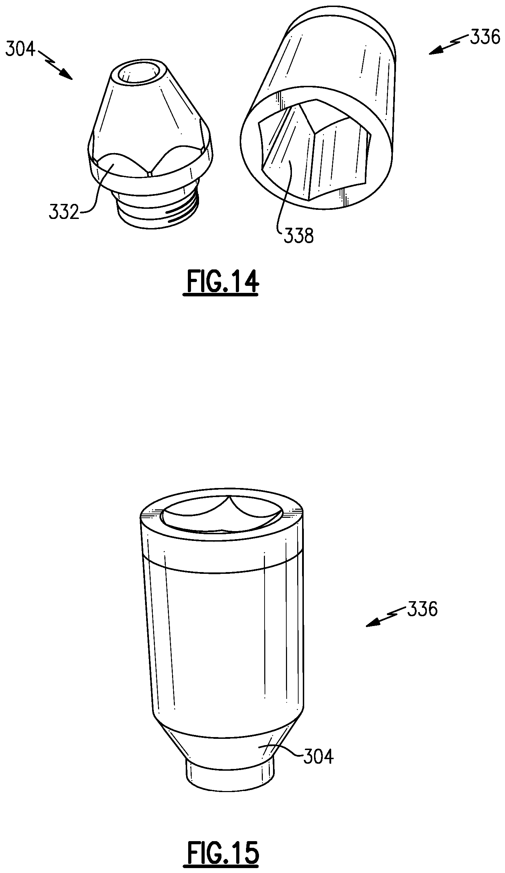

Figure 14 illustrates a nozzle 304 shown with a matching standard type socket 336 having six internal sides 338 for fitment to and removal from the nozzle 304. The six flats 332 can be engaged with the socket 336, allowing the nozzle 304 to be easily removed and replaced using standard nut runners which can be incorporated in to the above-described automated changing system. Six flats 332 also do not cause turbulence in the shield gas as can happen when less than six flats 332 are employed. This could cause issues when welding materials such as titanium, which is particularly sensitive to contamination by atmospheric gases drawn in to the shield gas stream due to such turbulence. Figure 15 illustrates the socket 336 once attached to the nozzle 304.

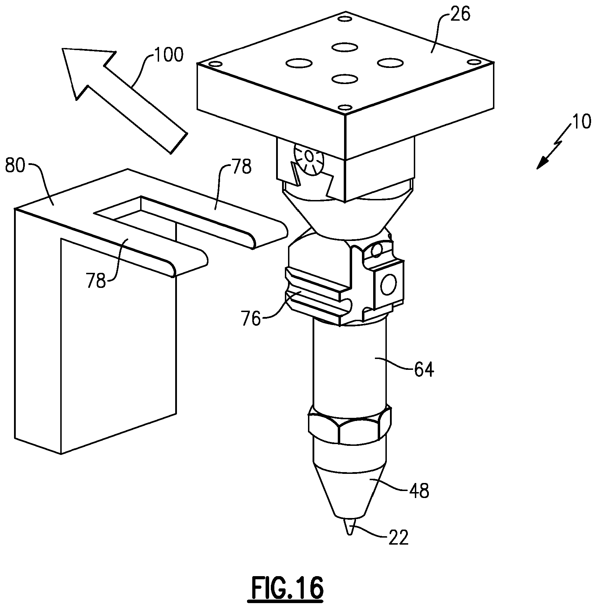

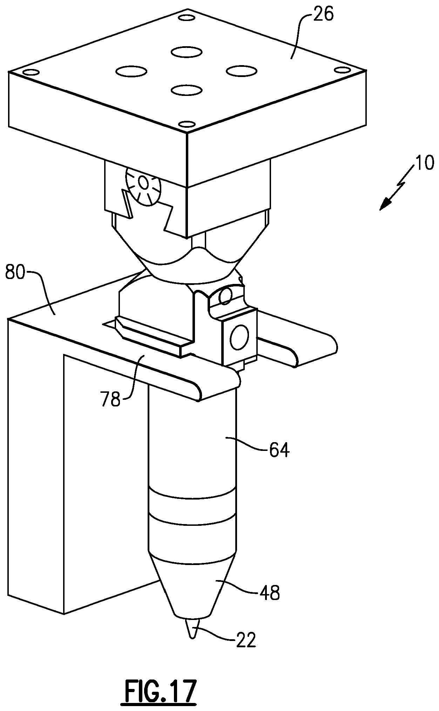

Figures 16 to 30 illustrate an automatic consumable changing process for changing the electrode 22 in the welding torch 24. With regards to the automatic consumable changing process, the welding torch 24 can be a TIG welding torch or a plasma welding torch. As shown in Figure 16, the welding torch 24 is removed from the seam tracker 12 and moved along arrow 100 by the robot arm 14 to be brought into alignment with the fixed docking station 80. In Figure 17, the welding torch 24 is positioned in the fixed docking station 80 such that one of the opposing arms 78 of the fixed docking station 80 is received in one of the slots 76 of the welding torch 24.

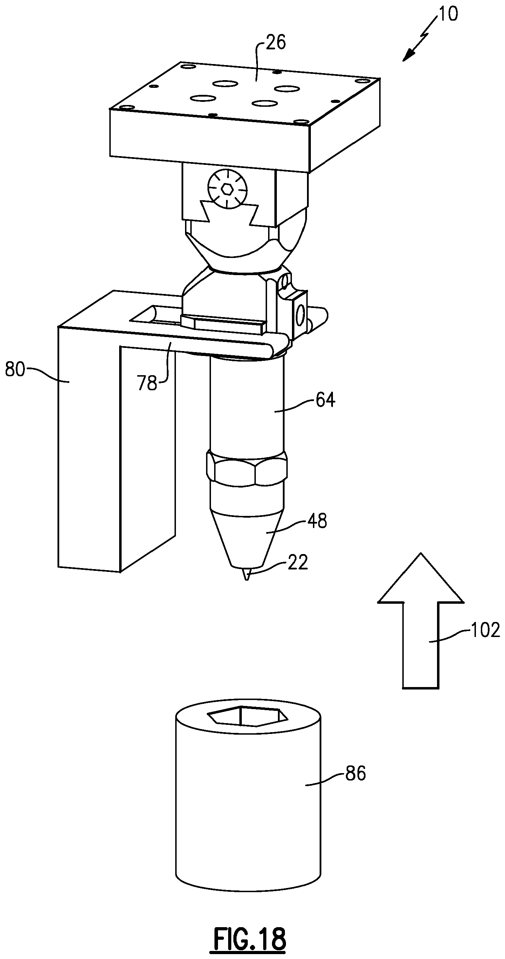

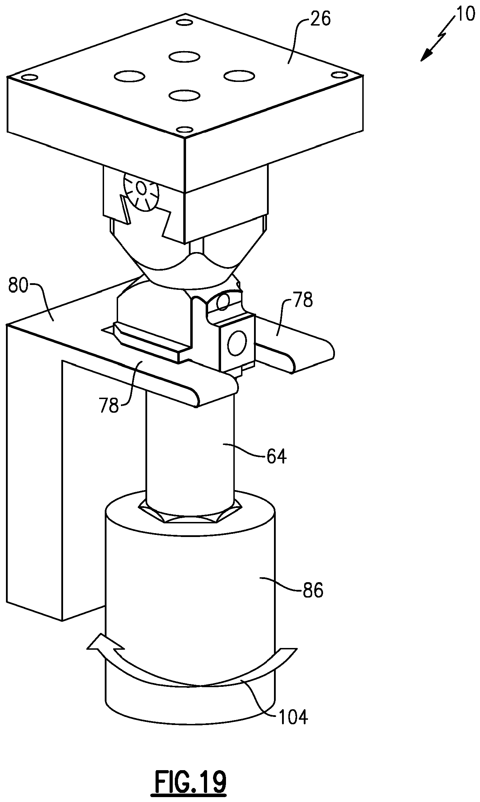

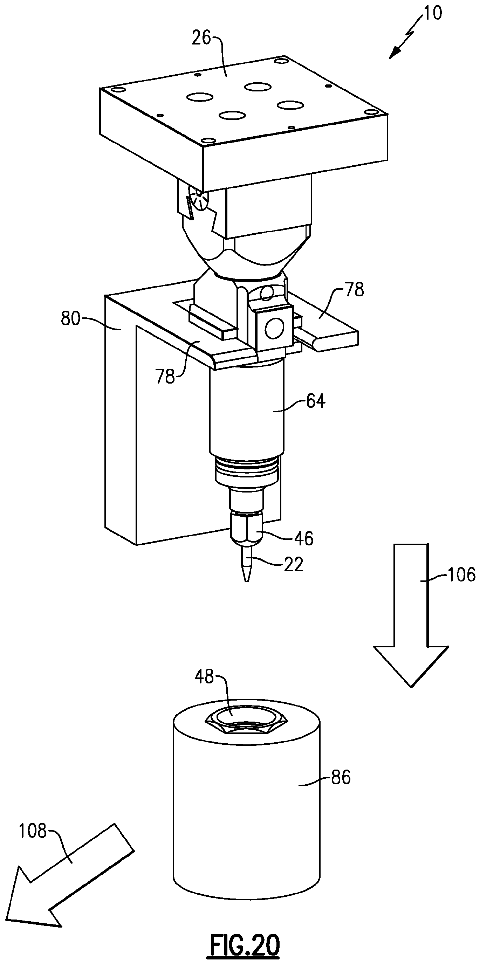

Figure 18 shows a cup gripping socket 86 that is moved by a first servo-controlled nut runner (not shown) upwardly along arrow 102 towards the welding torch 24 for engaging and gripping the cup gripping socket 86. In Figure 19, the cup gripping socket 86 is engaged with the shield gas cup 48, and the cup gripping socket 86 is then rotated counter-clockwise about arrow 104 to disengage the right hand threaded shield gas cup 48 from the torch body 64 and then withdraw to permit access for the electrode 22 removal process. As shown in Figure 20, the cup gripping socket 86, which now holds the shield gas cup 48, is retracted from the torch body 64 and moved downwardly away from the welding torch 64 along arrow 108 to another location for use later.

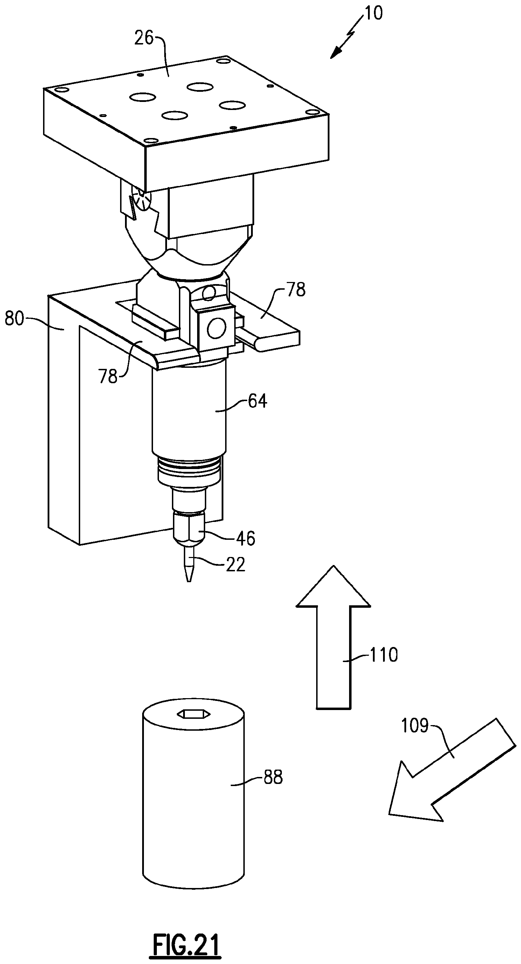

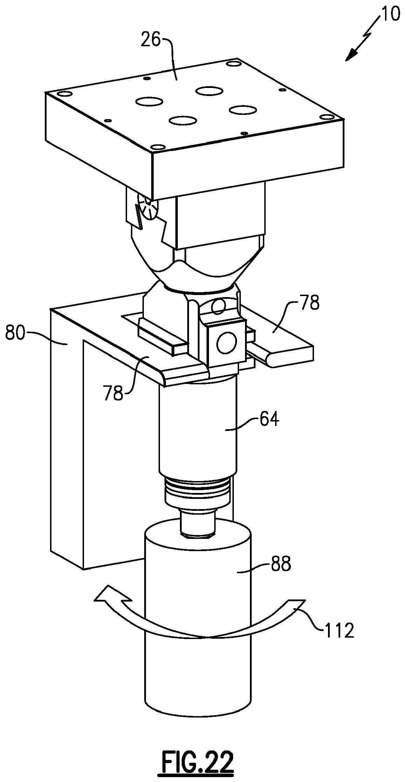

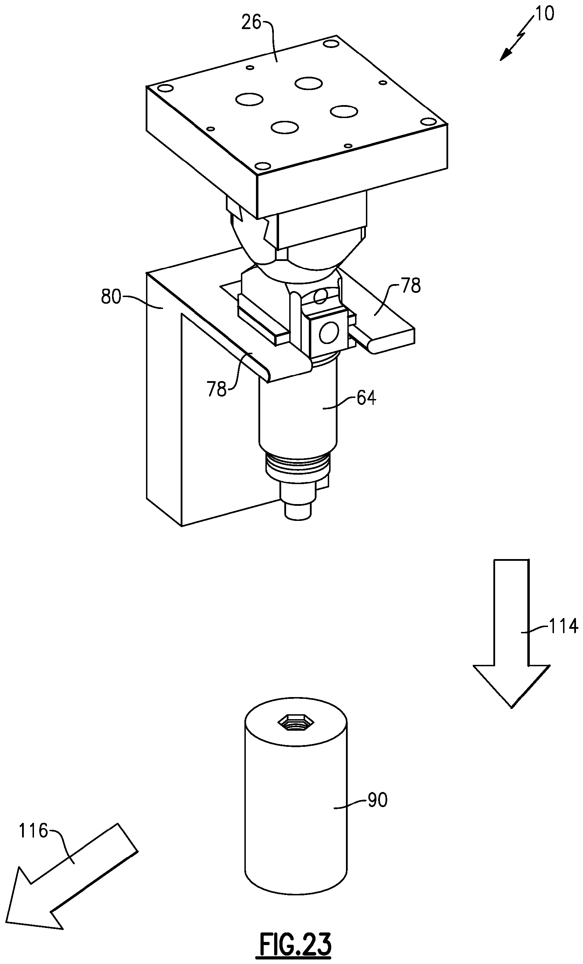

In Figure 21, a second servo-controlled nut runner (not shown) moves an empty electrode gripping socket 88 towards the docked welding torch 24 along arrow 109 and upwardly along arrow 110 to engage the docked welding torch 24. In Figure 22, the electrode gripping socket 88 is rotated counter-clockwise about arrow 112 to disengage the electrode 22 and the retaining nut 46 from the right handed threaded electrode holder 40. In Figure 23, the electrode gripping socket 88 holding the electrode 22 and the retaining nut 46 is moved downwardly along the arrow 114 away from the welding torch 24 and away from the welding torch 24 along arrow 116. The electrode gripping socket 88 can be moved to a "dump station," where the electrode 22 and the retaining nut 46 are released into a bin. The retaining nut 46 can be recovered and reused, and the electrode 22 can be collected and recycled.

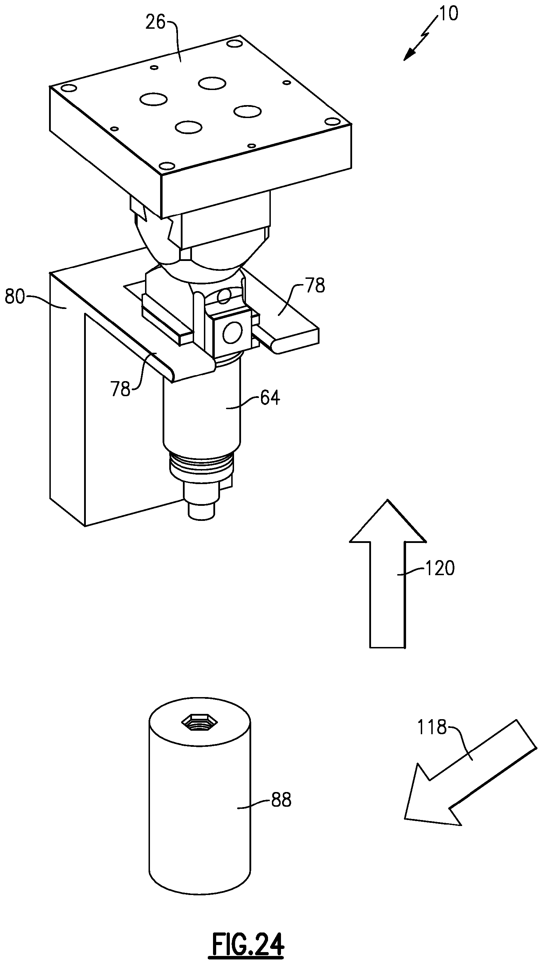

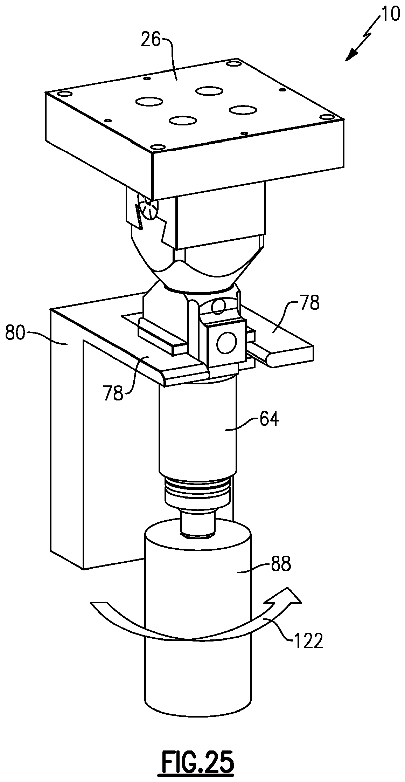

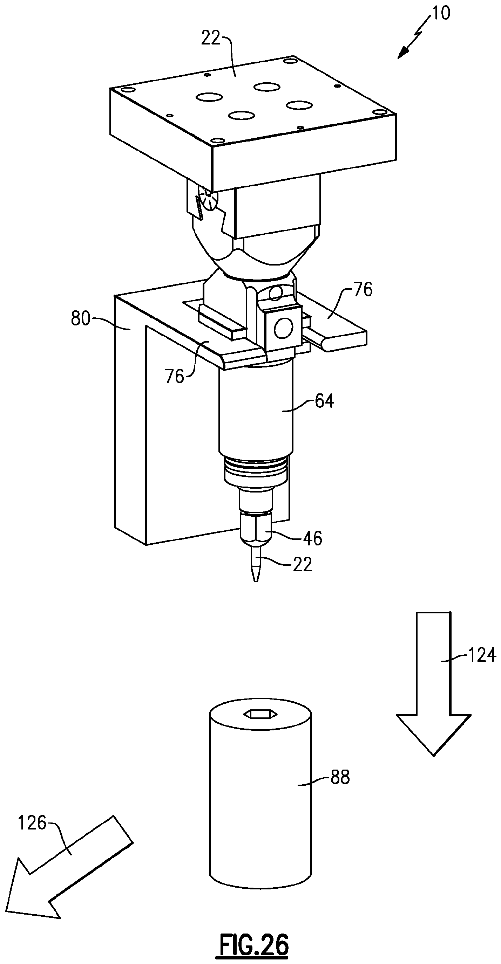

In Figure 24, an electrode replacement socket 90 that is pre-loaded with a retaining nut 46 and an electrode 22 is moved along arrow 118 by a third servo-controlled nut runner (not shown) to be located under the welding torch 24 and then moved upwardly along arrow 120 to engage the welding torch 24. As shown in Figure 25, after the pre-loaded electrode replacement socket 90 engages the welding torch 24, the pre-loaded electrode replacement socket 90 is rotated clockwise along arrow 122 to secure the electrode 22 and the retaining nut 46 to the torch body 64 of the welding torch 24. The pre-loaded electrode replacement socket 90 is driven by a servo drive so that a precise and preset tightening torque can be applied. In one example, the tightening torque is about 180 to about 200 N cm. After tightening to the pre-set torque, as shown in Figure 26, the servo driven electrode replacement socket 90 disengages from the retaining nut 46. The pre-loaded electrode replacement socket 90 disengages from the welding torch 24 by moving downwardly along arrow 124 and away from the welding torch 24 along arrow 126, preparing the welding torch 24 for re-fitment of the shield gas cup 48.

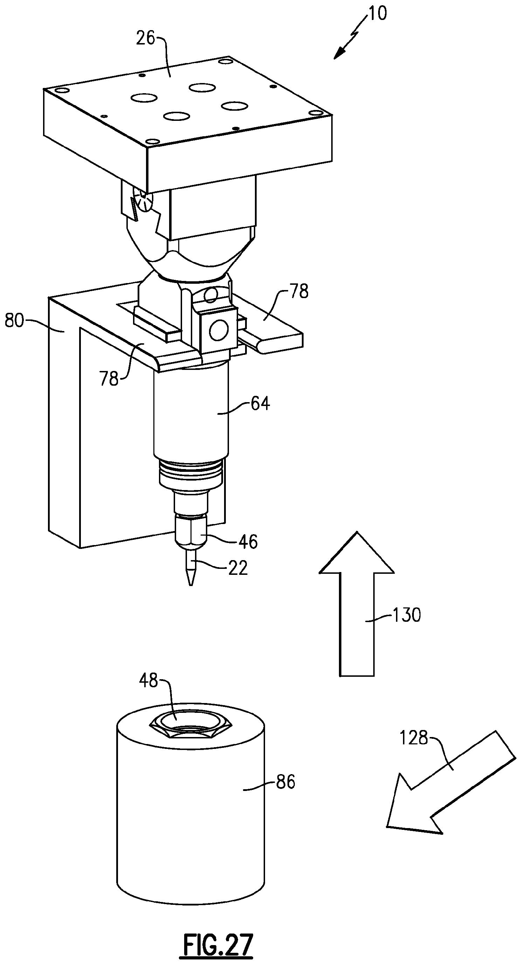

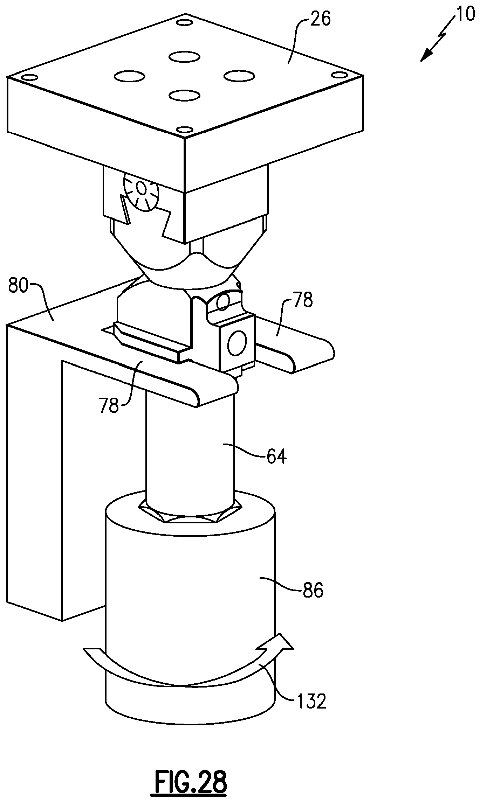

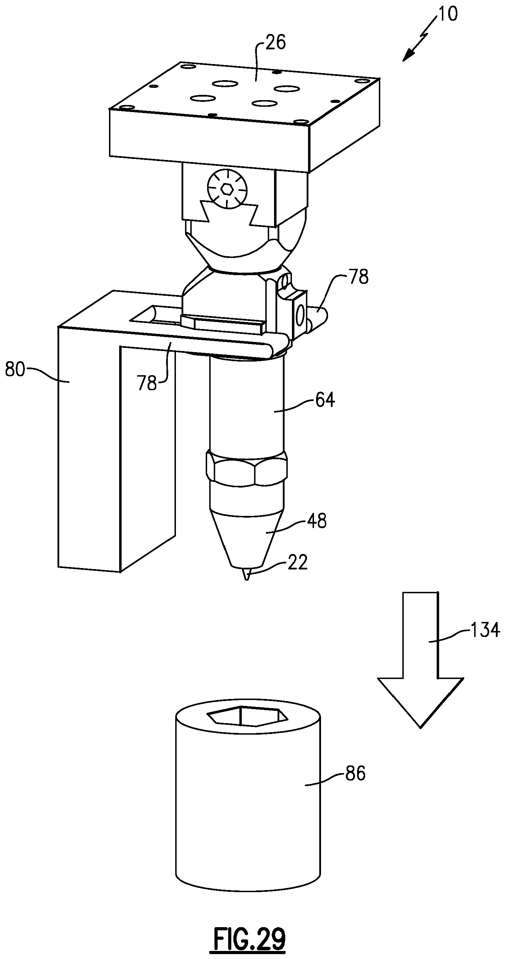

In Figure 27, the first servo-controlled nut runner returns the cup gripping socket 86 that holds the shield gas cup 48 to the fixed docking station 80 to reinstall the shield gas cup 48 to the torch body 64 of the welding torch 24. The cup gripping socket 86 is moved by the first servo-controlled nut runner along arrow 128 and then upwardly along arrow 130 to engage the welding torch 24. In Figure 28, the shield gas cup 48 is reengaged with the welding torch 24 and rotated by the controlled torque servo drive about arrow 132 to thread the shield gas cup 48 onto the welding torch 24 using the controlled torque servo drive. In one example, the shield gas cup 48 is tightened to a torque of about 50 N cm. In Figure 29, the cup gripping socket 86 is withdrawn along arrow 134 after the shield gas cup 48 is refitted.

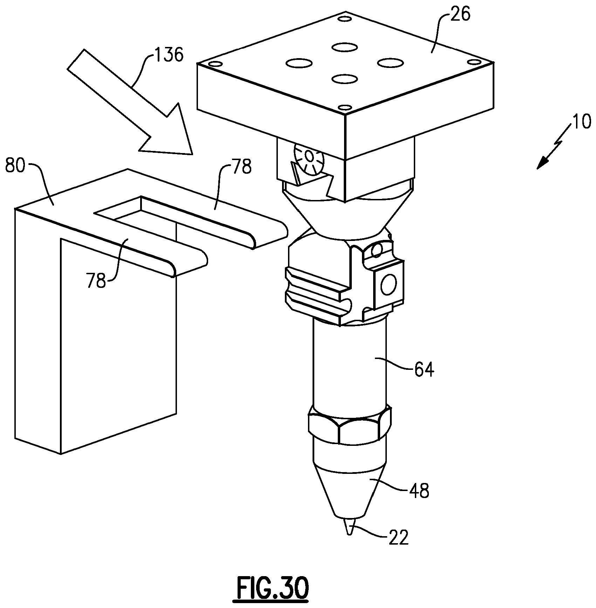

Figure 30 shows the robot arm 14 removing the welding torch 24 from the fixed docking station 80 along arrow 136. The welding torch 24 can now be retuned to the seam tracker 12 and can continue welding until the electrode 22 needs replacement again. When the electrode 22 needs replacement, the steps shown and described in Figures 15 to Figure 29 are repeated. This automated method is fast, as the shield gas cup 48, the electrode 22, and the retaining nut 46 can be removed from the welding torch 24 and reinstalled in the welding torch 24 in about 5 to 10 seconds.

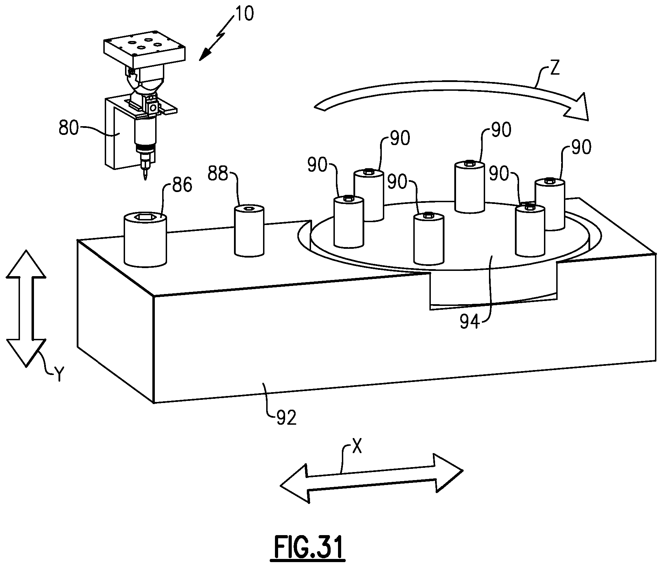

Figure 31 illustrates the servo slide 92 that holds the cup gripping socket 86, the electrode gripping socket 88 and a plurality of a pre-loaded electrode replacement sockets 90 that are pre-installed each with an electrode 22 and a retaining nut 46. The servo-controlled nut runners lift and move the sockets 86, 88 and 90 towards and away from the servo slide 92 and the welding torch 24 for the removal and installation of the parts.

The servo slide 92 holds the sockets 86, 88 and 90. A plurality a pre-loaded electrode replacement sockets 90 are located on a rotary table 94 and are each pre-loaded with a new electrode 22 and a new retaining nut 46. The rotary table 94 rotates to align the robot arm 14 with one of the pre-loaded electrode replacement sockets 90.

In one example, the servo slide 92 moves to position the required gripping socket 86, 88 and 90 near the welding torch 24 to remove and install the necessary part. The servo slide 92 is moveable in the direction X and the direction Y, and the rotary table 94 rotates in the direction Z. The servo slide 92 moves to align each of the cup gripping socket 86 and the electrode gripping socket 88 with the welding torch 24 to remove the shield gas cup 48 and the electrode 22/retaining nut 46, respectively. The servo slide 92 then moves into the desired position, and the rotary table 94 rotates to position a pre-loaded electrode replacement socket 90 under the welding torch 24 to install a new electrode 22 and a new retaining nut 46. The servo slide 92 them moves such that the cup gripping socket 86 holding the gas shield cup 48 can be installed on the welding torch 24. Although it is described that the servo slide 92 moves, it is also possible for the welding torch 24 to move.

In another embodiment, if the seam tracker 12 can resist the torques applied during the replacement of the electrode 22, then the fixed docking station can be omitted. In this example, the robot arm 14 is programmed to move the welding torch 24 to the servo-controlled nut runners, engaging and disengaging the welding torch 24 as needed. In this example, the arrows 100 to 134 described above can represent movement of the welding torch 24.

The automatic changing process can also be used to attach and remove the above-described nozzle 504 of a plasma welding torch assembly. The above description relating to the retaining nut 46 with respect to Figures 16 to 31 applies to the above described nozzle 304.

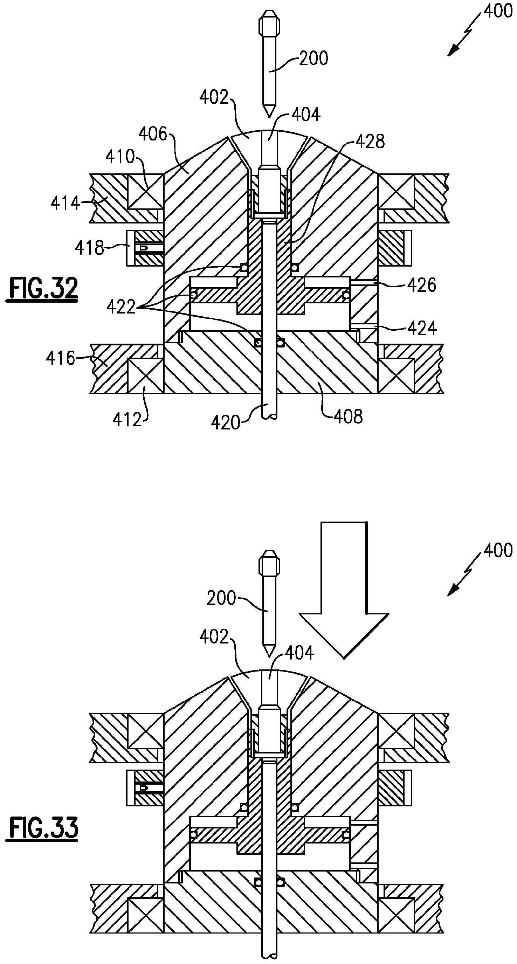

Figure 32 illustrates an autochanger 400 used to change the above-described electrode 200. The autochanger receives the electrode 200 (used with either a plasma torch electrode or a TIG torch electrode) and includes a split collet 402 with a bore 404 that matches a diameter of the electrode 200. The autochanger 400 includes a collet spindle upper body 406 and a collet spindle lower body 408 (together the collet spindle assembly). The autochanger 400 includes an upper sealed ball bearing race 410 and a lower sealed ball bearing race 412, respectively, which are fixed in a fixed upper housing 414 and a lower housing 416, respectively. A drive gear or pulley 418 is secured to a spindle to enable rotation by a torque controlled electric motor (not shown). The autochanger 400 also includes an electrode ejector rod 420. Seals 422 prevent leakage of a piston actuating air supply. The autochanger 400 includes an inlet port 424 to supply air to release the collet 402 and an inlet port 426 to supply air to clamp the collet 402 about the electrode 200. The autochanger 400 also includes a collet draw bar and actuating piston 428.

Figures 33 to 39 illustrates a process of automatically changing the electrode 200. In step 1 shown in Figure 33, the electrode 200 is inserted into the bore 404 of the split collet 402.

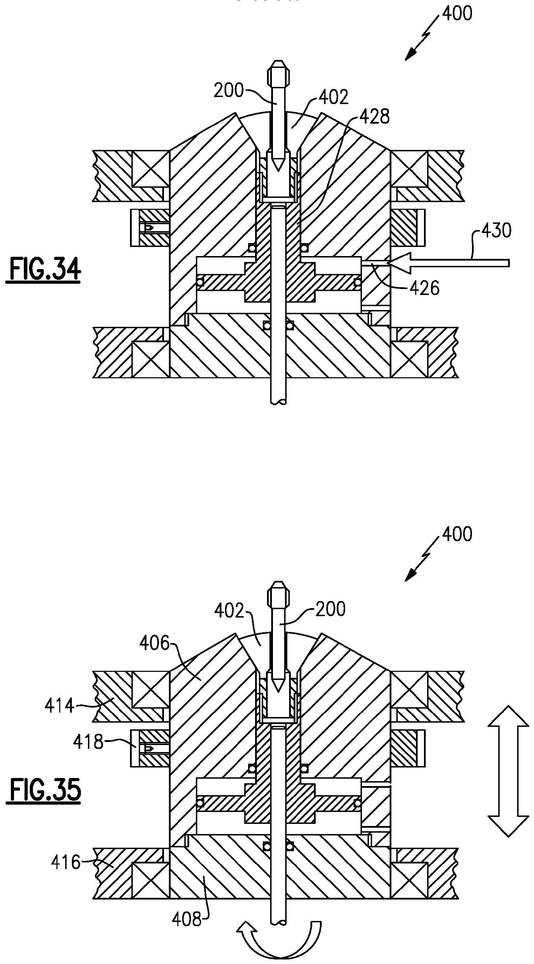

In step 2 shown in Figure 34, pressurized air 430 is delivered into the inlet port 426, causing the collect draw bar and actuating piston 428 to move downwardly, which forces the split collect 402 to grip the electrode 200.

Figure 34 shows step 3. The collet spindle assembly 406 and 408 is rotated by the drive gear or pulley 418 using a remotely mounted electric motor (not shown). With a right hand thread on the electrode 200, the collet spindle assembly 406 and 408 is rotated counter clockwise to unscrew or decouple the electrode 200 from the welding torch (not shown). The entire collet spindle assembly 414 and 416 or driver gear or pulley 418 must either "float" to permit the electrode 202 to be removed or the collet spindle assembly 406 and 408 to be splined to permit downward motion while the electrode 200 is unscrewed.

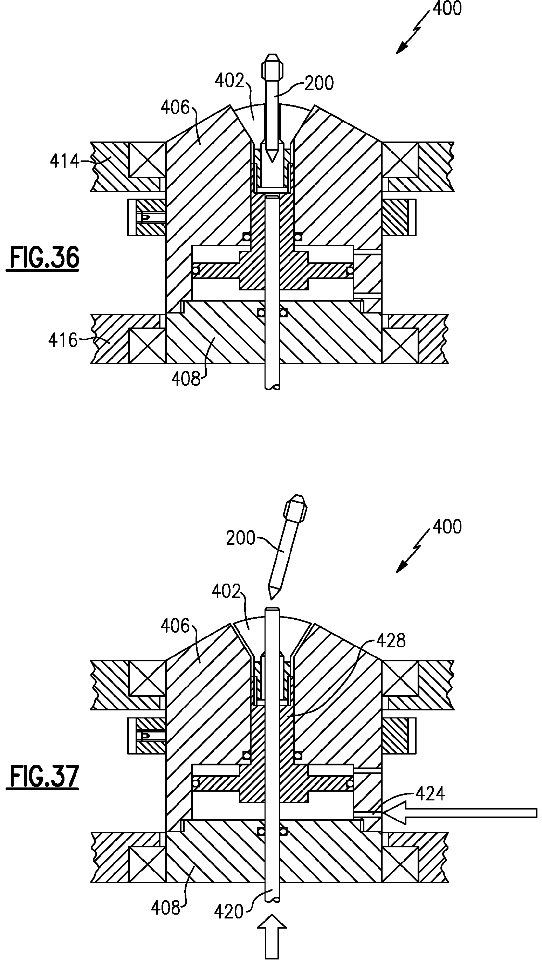

Figure 36 illustrates the fourth step. After the electrode 200 has been removed from the welding torch, the welding torch is lifted vertically (or the spindle assembly is moved downwardly) a distance that is sufficient to allow the electrode 200 to be ejected in the next step.

The fifth step is shown in Figure 37. Pressurized air is supplied to the inlet port 424, forcing the collet draw bar and actuating piston 428 upwardly and releasing the clamping force on the split collet 402. The electrode ejector rod 420 is then pushed upwardly by a pneumatic cylinder or solenoid, ejecting the electrode 200 from the split collet 402.

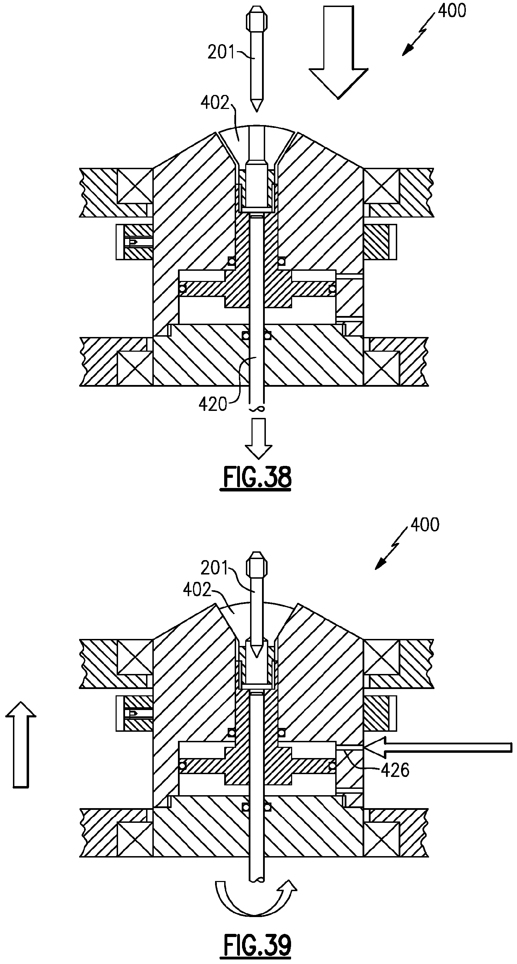

Figure 38 illustrates the sixth step. The electrode ejector rod 420 is retracted and a new electrode 201 is positioned over the empty split collet 402 by a remote device. The electrode 201 is then pushed down into the split collet 402.

The seventh and final step is shown in Figure 39. Pressurized air is supplied to the inlet port 426 to clamp the new electrode 201 in the split collet 402. The welding torch is repositioned, and the collet spindle assembly 406 and 408 is rotated clockwise and pushed upwardly to insert the new electrode 201 into the welding torch, coupling the new electrode 201 to the welding torch.

Employing an electrode with a working end portion having a 60° included angle, together with a slight increase in the overall length of the electrode, provides a greater length that the split collet 402 can grip. Lengthening a prior art electrode would require the use of a much longer nozzle, which would be less well cooled and not capable of carrying the high welding currents required with the process.

The foregoing description is only exemplary of the principles of the invention. Many modifications and variations are possible in light of the above teachings. It is, therefore, to be understood that within the scope of the appended claims, the invention may be practiced otherwise than using the example embodiments which have been specifically described. For that reason the following claims should be studied to determine the true scope and content of this invention.

## Claims

1. An electrode comprising:
a working end portion defining a first truncated cone;
a seating end portion defining a second truncated cone and including a threaded portion having a plurality of threads with a thread angle of 55°; and
an elongated body defining a longitudinal axis, wherein the elongated body is located between the seating end portion and the working end portion.

2. The electrode as recited in claim 1, wherein the first truncated cone defines an included angle of 60°.

3. The electrode as recited in claim 1, wherein the second truncated cone defines an included angle of 60°.

4. The electrode as recited in claim 1, wherein the seating end portion includes a seating end flat surface that is planar and perpendicular to the longitudinal axis.

5. The electrode as recited in claim 1, wherein the working end portion and the elongated body are made of a first material and the threaded portion is made of a second material.

6. The electrode as recited in claims 1 or 5, wherein the working end portion includes a working end flat surface that is planar and perpendicular to the longitudinal axis.

7. The electrode as recited in claim 1, wherein the seating end portion includes a circumferential portion located between the threaded portion and the second truncated cone, and the second truncated cone is defined by a seating end angled surface and a seating end flat surface.

8. The electrode as recited in claim 5, wherein the first material is tungsten, and the second material is one of copper alloy and silver alloy.

9. The electrode as recited in claim 5, wherein the elongated body is made of tungsten.

10. The electrode as recited in claim 5, wherein the working end portion includes a working end surface that has a radius.

11. A method of changing the electrode of claim 1 comprising the steps of:
inserting the electrode attached to a welding torch into a bore of a collet;
gripping the electrode in the collet;
rotating the collet in a first direction to decouple the electrode from the welding torch;
releasing the electrode from the collet;
positioning a new electrode in the collet;
gripping the new electrode in the collet; and
rotating the collet in an opposing second direction to couple the new electrode to the welding torch.

12. The method as recited in claim 11, wherein the step of gripping the electrode includes delivering pressurized air to an inlet port to grip the electrode.

13. The method as recited in claim 11, wherein the step of releasing the electrode includes delivering pressurized air to an inlet port to move a piston upwardly to release the electrode.

14. The method as recited in claim 13, wherein the step of releasing the electrode includes ejecting the electrode from the collect with an electrode ejector rod that moves upwardly.

15. The method as recited in claim 11, wherein the step of gripping the new electrode includes delivering pressurized air to an inlet port to grip the electrode.

## Patentansprüche

1. Elektrode, die Folgendes umfasst:
einen Arbeitsendabschnitt, der einen ersten Kegelstumpf definiert,
einen Sitzendabschnitt, der einen zweiten Kegelstumpf definiert und einen Gewindeabschnitt einschließt, der eine Vielzahl von Gewindegängen mit einem Flankenwinkel von 55° aufweist, und
einen länglichen Körper, der eine Längsachse definiert, wobei der längliche Körper zwischen dem Sitzendabschnitt und dem Arbeitsendabschnitt angeordnet ist.

2. Elektrode nach Anspruch 1, wobei der erste Kegelstumpf einen eingeschlossenen Winkel von 60° definiert.

3. Elektrode nach Anspruch 1, wobei der zweite Kegelstumpf einen eingeschlossenen Winkel von 60° definiert.

4. Elektrode nach Anspruch 1, wobei der Sitzendabschnitt eine flache Sitzendfläche einschließt, die eben und senkrecht zu der Längsachse ist.

5. Elektrode nach Anspruch 1, wobei der Arbeitsendabschnitt und der längliche Körper aus einem ersten Material hergestellt sind und der Gewindeabschnitt aus einem zweiten Material hergestellt ist.

6. Elektrode nach den Ansprüchen 1 oder 5, wobei der Arbeitsendabschnitt eine flache Arbeitsendfläche einschließt, die eben und senkrecht zu der Längsachse ist.

7. Elektrode nach Anspruch 1, wobei der Sitzendabschnitt einen Umfangsabschnitt einschließt, der zwischen dem Gewindeabschnitt und dem zweiten Kegelstumpf angeordnet ist und der zweite Kegelstumpf durch eine abgewinkelte Sitzendfläche und eine flache Sitzendfläche definiert wird.

8. Elektrode nach Anspruch 5, wobei das erste Material Wolfram ist und das zweite Material eines von einer Kupferlegierung und einer Silberlegierung ist.

9. Elektrode nach Anspruch 5, wobei der längliche Körper aus Wolfram hergestellt ist.

10. Elektrode nach Anspruch 5, wobei der Arbeitsendabschnitt eine Arbeitsendfläche einschließt, die einen Radius aufweist.

11. Verfahren zum Wechseln der Elektrode nach Anspruch 1, das die folgenden Schritte umfasst:
Einsetzen der Elektrode, die an einem Schweißbrenner befestigt ist, in eine Bohrung einer Klemmhülse,
Greifen der Elektrode in der Klemmhülse,
Drehen der Klemmhülse in einer ersten Richtung, um die Elektrode von dem Schweißbrenner abzukoppeln,
Freigeben der Elektrode aus der Klemmhülse,
Positionieren einer neuen Elektrode in der Klemmhülse,
Greifen der neuen Elektrode in der Klemmhülse und
Drehen der Klemmhülse in einer entgegengesetzten zweiten Richtung, um die neue Elektrode an den Schweißbrenner zu koppeln.

12. Verfahren nach Anspruch 11, wobei der Schritt des Greifens der Elektrode das Zuführen von Druckluft zu einem Einlassanschluss, um die Elektrode zu greifen, einschließt.

13. Verfahren nach Anspruch 11, wobei der Schritt des Freigebens der Elektrode das Zuführen von Druckluft zu einem Einlassanschluss, um einen Kolben nach oben zu bewegen, um die Elektrode freizugeben, einschließt.

14. Verfahren nach Anspruch 13, wobei der Schritt des Freigebens der Elektrode das Ausstoßen der Elektrode aus der Klemmhülse mit einem Elektrodenausstoßer, der sich nach oben bewegt, einschließt.

15. Verfahren nach Anspruch 11, wobei der Schritt des Greifens der neuen Elektrode das Zuführen von Druckluft zu einem Einlassanschluss, um die Elektrode zu greifen, einschließt.

## Revendications

1. Électrode comprenant :
une partie d'extrémité de travail définissant un premier cône tronqué,
une partie d'extrémité de siège définissant un second cône tronqué et incluant une partie filetée comportant une pluralité de filetages ayant un angle de filet de 55°, et
un corps allongé définissant un axe longitudinal, dans lequel le corps allongé est situé entre la partie d'extrémité de siège et la partie d'extrémité de travail.

2. Électrode selon la revendication 1, dans laquelle le premier cône tronqué définit un angle inclus de 60°.

3. Électrode selon la revendication 1, dans laquelle le second cône tronqué définit un angle inclus de 60°.

4. Électrode selon la revendication 1, dans laquelle la partie d'extrémité de siège inclut une surface plate d'extrémité de siège qui est planaire et perpendiculaire à l'axe longitudinal.

5. Électrode selon la revendication 1, dans laquelle la partie d'extrémité de travail et le corps allongé sont fabriqués avec un premier matériau et la partie filetée est fabriquée avec un second matériau.

6. Électrode selon les revendications 1 ou 5, dans laquelle la partie d'extrémité de travail inclut une surface plate d'extrémité de travail qui est planaire et perpendiculaire à l'axe longitudinal.

7. Électrode selon la revendication 1, dans laquelle la partie d'extrémité de siège inclut une partie circonférentielle située entré la partie filetée et le second cône tronqué, et le second cône tronqué est défini par une surface inclinée d'extrémité de siège et une surface plate d'extrémité de siège.

8. Électrode selon la revendication 5, dans laquelle le premier matériau est du tungstène et le second matériau est l'un parmi un alliage de cuivre et un alliage d'argent.

9. Électrode selon la revendication 5, dans laquelle le corps allongé est fait de tungstène.

10. Électrode selon la revendication 5, dans laquelle la partie d'extrémité de travail inclut une surface d'extrémité de travail qui a un rayon.

11. Procédé pour remplacer l'électrode selon la revendication 1, comprenant les étapes consistant à :
insérer l'électrode fixée à une torche de soudage dans un trou d'une douille de serrage,
saisir l'électrode dans la douille de serrage,
faire tourner la douille de serrage dans une première direction pour découpler l'électrode de la torche de soudage,
libérer l'électrode de la douille de serrage,
positionner une nouvelle électrode dans la douille de serrage,
saisir la nouvelle électrode dans la douille de serrage, et
faire tourner la douille de serrage dans une seconde direction opposée pour coupler la nouvelle électrode à la torche de soudage.

12. Procédé selon la revendication 11, dans lequel l'étape de saisie de l'électrode inclut la fourniture d'air sous pression à un orifice d'admission pour saisir l'électrode.

13. Procédé selon la revendication 11, dans lequel l'étape de libération de l'électrode inclut la fourniture d'air sous pression à un orifice d'admission pour déplacer un piston vers le haut pour libérer l'électrode.

14. Procédé selon la revendication 13, dans lequel l'étape de libération de l'électrode inclut l'éjection de l'électrode depuis la douille de serrage avec une baguette d'éjection d'électrode qui se déplace vers le haut.

15. Procédé selon la revendication 11, dans lequel l'étape de saisie de la nouvelle électrode inclut la fourniture d'air sous pression à un orifice d'admission pour saisir l'électrode.
